## Europäisches Patentamt

## European Patent Office

## Office européen des brevets

(19)

(11) Veröffentlichungsnummer: **0 268 809**
**B1**

(12)

# EUROPÄISCHE PATENTSCHRIFT

(45) Veröffentlichungstag der Patentschrift:
12.09.90

(51) Int. Cl.⁵: **D21H 19/12**

(21) Anmeldenummer: 87115071.0

(22) Anmeldetag: 15.10.87

(54) Verfahren zur Herstellung von Melaminharzfolien.

(30) Priorität: 24.10.86 DE 3636219
08.01.87 DE 3700344

(43) Veröffentlichungstag der Anmeldung:
01.06.88 Patentblatt 88/22

(45) Bekanntmachung des Hinweises auf die Patenterteilung:
12.09.90 Patentblatt 90/37

(84) Benannte Vertragsstaaten:
AT BE DE ES FR GB IT SE

(56) Entgegenhaltungen:
EP-A- 0 077 067
EP-A- 0 088 978
AT-A- 313 593
CH-A- 578 935
DE-A- 1 696 242
DE-A- 2 460 994
DE-A- 2 724 562
DE-B- 2 309 334
GB-A- 1 575 667
US-A- 3 394 093

CHEMICAL ABSTRACTS, Band 90, Nr. 22, 28. Mai 1979,
Seite 107, Zusammenfassung Nr. 170442w, Columbus,
Ohio, US; & JP-A-78 149 269
CHEMICAL ABSTRACTS, Band 90, Nr. 26, 25. Juni 1979,

(73) Patentinhaber: CASSELLA Aktiengesellschaft, Hanauer
Landstrasse 526, D-6000 Frankfurt am Main 61(DE)

(72) Erfinder: Wolf, Alfons, Einhardstrasse 34,
D-6453 Seligenstadt(DE)
Erfinder: Lemke, Helmut, Burgstrasse 33,
D-6000 Frankfurt 1(DE)

(74) Vertreter: Urbach, Hans-Georg, Dr. et al, Hanauer
Landstrasse 526, D-6000 Frankfurt am Main 61(DE)

(56) Entgegenhaltungen: (Fortsetzung)
Seite 124, Zusammenfassung Nr. 206188J, Columbus,
Ohio, US; & JP-A-79 16 590

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Melaminharzfolien werden in der Möbelindustrie wie Furniere zum Beschichten von Flächen und Kanten von Holzwerkstoffen, wie z.B. Holzspan-, Hartfaser-, Tischler- oder Sperrholzplatten, verwendet.

Derartige Melaminharzfolien werden dadurch hergestellt, daß weiße, eingefärbte oder bedruckte Bahnen aus Papier, Cellulosevlies oder Cellulosegewebe mit wäßrigen oder alkoholischen Lösungen von Melaminharzen oder mit wäßrigen Lösungen von Melamin-Harnstoff-Harzgemischen imprägniert und anschließend getrocknet werden. Die wäßrigen Lösungen der Tränkharze können dabei auch zusätzlich eine Kunstharzdispersion zur Verbesserung der Elastizität der fertigen Folien enthalten.

Die Trocknung wird dabei so durchgeführt, daß eine partielle Härtung des Tränkharzes eintritt und die so hergestellten Grundier- oder Dekorfolien keinen "Fluß" mehr zeigen, d.h. daß das in ihnen enthaltende Aminoplastharz unter der Einwirkung von Wärme nicht mehr fließt. Die Grundier- und Dekorfolien werden nach dem Aufbringen auf den Holzwerkstoff noch lackiert. Diese Lackierung kann auch bei der Herstellung der Folien nach der Trocknung erfolgen. Man erhält auf diese Weise sogenannte "Finish-Folien" oder "Fertigfolien".

Grundier-, Dekor- und Fertigfolien können auch für die Beschichtung von Kanten in entsprechend breite Streifen geschnitten werden und werden dann als sogenannte "Kantenstreifen", "Kantenmaterial" oder "Endloskanten" verwendet.

Die Melaminharzfolien werden mittels eines geeigneten Leimes auf die Flächen oder Kanten der Holzwerkstoffe unter Hitze und Druck aufgepreßt. Bei Verwendung geeigneter Kaltleime ist die Anwendung von Hitze nicht erforderlich.

Die Melaminharzfolien können jedoch auch auf der Rückseite einen Auftrag eines geeigneten Klebers erhalten und dann als sogenannte Selbstklebefolien bzw. -kanten verwendet werden.

Die genannten Melaminharzfolien sollten insbesondere im Bereich der Finish-Folien und Finish-Kanten nur eine geringe Spaltneigung, aber eine gute Überspannfähigkeit, Elastizität und Flexibilität besitzen.

Für die Herstellung von Melaminharzfolien werden allgemein Bahnen aus Papier, Cellulosevlies- oder -gewebe mit einem Gewicht von 50 bis 130 g/m² und für die Herstellung von Finish-Kanten Bahnen aus Papier, Cellulosevlies- oder -gewebe mit einem Gewicht von 80 bis 350 g/m² eingesetzt. Im Bereich der Melaminharzfolien lasen sich die Anforderungen bezüglich Spaltneigung, Überspannfähigkeit, Elastizität und Flexibilität durch die Verwendung eines wäßrigen Tränkharzes auf der Basis einer Aminoplast-Kunstharzdispersion zumindest bei leichteren Bahnen weitgehend erfüllen. Dagegen werden bei Kantenmaterialien optimale Eigenschaften hinsichtlich Elastizität bzw. Flexibilität, Überspannfähigkeit und Spaltungsneigung nur dann erhalten, wenn bei der Herstellung als Tränkharz eine Lösung eines Melaminharzes in einem niederen Alkohol, vorzugsweise in Isopropanol, verwendet wird.

Bei den bisherigen Verfahren zur Herstellung von Melaminharzfolien enthalten die Tränkharzlösungen 20 bis 50 % Festharz, und die Imprägnierung des Papiers bzw. des Cellulosevlieses- oder -gewebes erfolgt so, daß bezogen auf die fertige Folie 15 bis 50 Gew.% Harz, als Trockensubstanz gerechnet, aufgetragen werden.

Ein bekanntes Verfahren zur Herstellung von Melaminharzfolien ist z.B. in der DE-C 2 309 334 beschrieben. Bei diesem Verfahren werden als Tränkharze Lösungen von monomeren Dimethylolmelaminmono- und/oder -dimethylether und/oder Trimethylolmelaminmono- und/oder -di und/oder -trimethylether verwendet, und dabei werden 20 bis 45 Gew.% der Methylolmelaminether, bezogen auf das Endgwicht der trockenen Folie, aufgebracht. Die Methylolmelaminether können dabei in Wasser oder einem geeigneten organischen Lösungsmittel gelöst zur Anwendung kommen. Bei der Verwendung von wäßrigen Tränkharzlösungen beträgt die Harzkonzentration 30 bis 40 Gew.%. Mit diesem Verfahren können wohl Papier bzw. Cellulosevliese- oder -gewebe mit einem Gewicht von 80 bis 110 g/m² zu Melaminharzfolien verarbeitet werden, die auch als Kantenmaterial für gerade Kanten noch eine genügende Elastizität besitzen. Diese so hergestellten Kantenmaterialien genügen jedoch den Ansprüchen an sogenannte Softkanten nicht. Bei der Verwendung von Papieren und Cellulosevliesen oder -geweben mit einem Gewicht schwerer als 120 g/m² ist auch bei der Herstellung von Kantenmaterial für gerade Kanten bei dem Verfahren der DE-C 2 309 334 die Verwendung von alkoholischen Tränkharzlösungen notwendig.

Bei der Verwendung von Tränkharzlösungen, die ein organisches Lösungsmittel enthalten, entweicht dieses bei dem Trockenvorgang in die Atmosphäre. Dies ist aus ökologischen Gründen bedenklich. Zur Vermeidung der Lösungsmittelemission in die Atmosphäre müssen daher besondere Maßnahmen ergriffen werden, beispielsweise muß an die Trocknung der imprägnierten Papiere, Vliese oder Gewebe eine Nachverbrennung nachgeschaltet werden. Die Installation derartiger Anlagen ist jedoch teuer, und ihre Unterhaltskosten sind hoch.

Die Verwendung von Tränkharzen, die aus einer Kombination von Aminoplastharzen mit Acrylat-Dispersionen bestehen, bewirkt wohl eine gewisse Elastifizierung der hergestellten Folien, hat jedoch vor allem bei Verwendung hoher Dispersionsanteile einen wesentlichen Verlust an Überspannfähigkeit und Spaltfestigkeit zur Folge.

Die DE-A 1 696 242 betrifft eine Papierbahn zur Verwendung als Laminat-Deckschicht bei der Herstellung von Gegenständen mit hoher Fleckenunempfindlichkeit und guter Glanzhaltbarkeit, insbesondere von Geschirr. Die Papierbahn wird dadurch hergestellt, daß Papier mit einer 30 bis 70% Feststoffanteile aufweisenden Lösung eines Reaktionsproduktes von Formaldehyd und Melamin mit einem Molekularverhältnis zwischen 1:1 und 1,9:1 und zugleich mit einem wasserlöslichen säurebildenden Aluminium- oder Zinksalz imprägniert wird. Der Anteil des Melaminharzes im imprägnierten Papier (gemessen auf trockener Basis) kann zwischen 45 und 70 Gew.% liegen.

Aus der EP-A 77 067 sind Melamintränkharz-Lösungen mit einem Festharzgehalt von mehr als 60%, beispielsweise 65 bis 70%, bekannt, die ein Molverhältnis Melamin:

Formaldehyd = 1 : (1,5 bis 1,8) besitzen und 5 bis 20 Gew.%, bezogen auf Harzanteil, einer hydroxylgruppenreichen Verbindung aus der Reihe der mehrwertigen Alkohole, nichtreduzierenden Zucker oder der niedrigmolekularen enzymatischen Abbauprodukte der Stärke mit Glucosegehalten unter 1% oder deren Hydrierungsprodukte enthalten. Sie dienen zum Tränken von Papier- bzw. Gewebebahnen, die nach dem Trocknen auf Holzwerkstoffplatten aufgepreßt werden.

Die US-A 3 394 093 betrifft ein wasserlösliches Aminoplastharz, das dadurch hergestellt wird, daß ein polyfunktionales Amin mit mindestens 3 Aminowasserstoffatomen im Molekül, die mit Aldehyden reagieren können, mit mindestens 3 mol Formaldehyd und mit mindestens 3 mol Methanol oder Ethanol zuerst bei einem pH Wert von 5,7 bis 6,7 und dann bei einem pH Wert von 7,5 bis 11,0 umgesetzt wird. Katalisierte Lösungen dieses Harzes mit einem Festkörpergehalt von ca. 60 bis 70 Gew.% werden zum Imprägnieren von Fasermaterialien, wie z .B. Papier, verwendet, das nach dem Trocknen z.B. einen Harzgehalt von 70 Gew.% aufweist und für Laminierzwecke verwendet wird.

Der Erfindung liegt die Aufgabe zugrunde, ein Verfahren für die Herstellung von Melaminharzfolien durch Imprägnieren von Papier, Cellulosevlies oder Cellulosegewebe mit einer Melaminharzlösung und anschließendem Trocknen anzugeben, das die Nachteile der bisherigen Verfahren nicht besitzt und das insbesondere bei Bahnen mit einem Gewicht schwerer als 80 g/m$^2$ ohne Anwendung von Alkoholen als Lösungsmittel für die Tränkharzlösungen Melaminharzfolien mit Eigenschaften liefert, wie sie bisher mit Tränkharzlösung unter Verwendung von Alkoholen, insbesondere Isopropanol, als Lösungsmittel erhalten worden sind.

Bei dem erfindungsgemäßen Verfahren zur Herstellung von Melaminharzfolien für die Beschichtung von Holzwerkstoffen wird eine mindestens 70gew.%ige wäßrige Lösung eines mindestens teilweise methylveretherten Melaminharzes einseitig so auf Papier, Cellulosevlies oder Cellulosegewebe aufgebracht und anschließend getrocknet, daß die Folie, bezogen auf ihr Endgewicht, 20 bis 50 Gew.% Melaminharz enthält.

Bei dem erfindungsgemäßen Verfahren können im Prinzip alle Melaminharze verwendet werden, die als Tränkharze geeignet sind und die in Wasser zu mindestens 70 Gew.% gelöst werden können und die teilweise oder völlig methylverethert und gegebenenfalls auf andere Weise modifiziert sind. Die Herstellung derartiger Melaminharze ist bekannt und erfolgt durch Umsetzung von Melamin mit Formaldehyd, wobei eine Veretherung und gegebenenfalls anderweitige Modifizierung vorgenommen wird. Geeignete Ausgangsmelaminharze für das erfindungsgemäße Verfahren sind unter verschiedenen Bezeichnungen im Handel.

Auch Melamin/Harnstoff-Harzmischkondensate und Gemische aus Melaminharzen und Harnstoffharzen kommen in Betracht, wobei in beiden Fällen bis zu 50 Gew.% des Melamins durch Harnstoff ersetzt sein können. Die Herstellung derartiger Mischkondensate und Harzmischungen durch Umsetzung der Aminoplastbildner mit Formaldehyd ist ebenfalls bekannt. Im Nachfolgenden wird nicht mehr extra erwähnt, daß anstelle der Melaminharze auch Melamin/Harnstoff-Harzmischkondensate und Gemische aus Melaminharzen und Harnstoffharzen eingesetzt werden können.

Die verwendeten Melaminharze kommen bei dem erfindungsgemäßen Verfahren in Form einer mindestens 70gew.%igen wäßrigen Tränkharzlösung zur Anwendung. D.h. zur Herstellung einer solchen Tränkharzlösung wird das Melaminharz in Wasser in einer solchen Menge aufgelöst bzw. verdünnt, daß die Lösung mindestens 70 Gew.% Festharz enthält. Insbesondere werden bei dem erfindungsgemäßen Verfahren 70bis 75gew.%ige wäßrige Lösungen des Melaminharzes verwendet.

Die maximale Konzentration der wäßrigen Tränkharzlösung an Melaminharz ist durch die Viskosität der Tränkharzlösung und ihre Penetrationsfähigkeit gegeben, die noch eine einwandfreie Imprägnierung erlauben müssen. Handelsübliche flüssige Melaminharze können häufig auch unveidünnt verwendet werden.

Die bei dem erfindungsgemäßen Verfahren benutzte Tränkharzlösung kann ein Melaminharz oder ein Gemisch aus zwei oder mehreren verschiedenen Melaminharzen enthalten.

Geeignete bevorzugte flüssige methylveretherte Melaminharze weisen z.B. ein Molverhältnis Melamin: Formaldehyd: Methanol von 1 : (2,2 bis 6) : (2,4 bis 6) auf.

Bei dem erfindungsgemäßen Verfahren können Papiere, Cellulosevliese oder Cellulosebahnen mit einem Gewicht von z.B. 80 bis 350 g/m$^2$ verwendet werden. Auf sie wird die mindestens 70gew.%ige wäßrige Lösung des Melaminharzes einseitig aufgebracht und anschließend getrocknet. Dieses Aufbringen und Trocknen wird in an sich bekannter Weise so durchgeführt, daß, bezogen auf das Endgewicht der Folie, 20 bis 50 Gew.%, vorzugsweise 30 bis 50 Gew.%, ganz besonders bevorzugt 30 bis 40 Gew.%, Melaminharz, in der Folie enthalten sind. Die an die Aufbringung anschließende Trocknung wird normalerweise bei einer Temperatur von 110 bis 170°C, vorzugsweise 130 bis 160°C, auf bekannten Vorrichtungen, z.B. in Trockenkammern oder Trockenkanälen (Schwebetrocknern) durchgeführt. Der Restfeuchtegehalt der hergestellten Folien liegt normalerweise bei 1 bis 5 Gew.% (bestimmt durch eine Differenztrocknung nach einem fünfminutenlangen Trocknen bei 160°C). Die bei dem erfindungsgemäßen Verfahren zum Einsatz kommende, mindestens 70gew.%ige wäßrige Lösung des Melaminharzes kann auch zur raschen Aushärtung des Melaminharzes bei der anschließenden Trocknung bis zu 3 Gew.%, , bezogen auf Festharz, an sich bekannte saure Katalysatoren enthalten. Als geeignete saure Katalysatoren kommen beispielsweise Ammonchlorid und/oder Paratoluolsulfonsäure in Betracht.

Zur Erzielung einer glatteren Oberfläche der fertig aufkaschierten Melaminharzfolie können der Harzlösung z.B. auch eine Polyvinylacetat-Dispersion, wasserlösliche Alkydharze oder Acrylatdispersionen zugesetzt werden.

Die mindestens 70gew.%ige wäßrige Lösung des Melaminharzes wird einseitig auf die Dekorseite der Bahn aufgebracht, was beispielsweise durch Aufwalzen, Aufrackeln oder Aufsprühen erfolgen kann.

Die nach dem erfindungsgemäßen Verfahren herstellbaren Melaminharzfolien sind sowohl zur Beschichtung von Flächen als auch insbesondere zur Beschichtung von Kanten geeignet und erfüllen auch die Anforderungen, die an die sogenannten Softkanten gestellt werden. Sie zeigen eine ausgezeichnete Elastizität und Flexibilität, gemessen durch den Biegetest beispielsweise mit einem Radius von 5 mm, bei gleichzeitigem guten Überspannverhalten und einer geringen Spaltungsneigung. Die nach dem erfindungsgemäßen Verfahren hergestellten Folien zeigen auch gegenüber Folien, , die unter Verwendung von Tränkharzen mit niedrigeren Konzentrationen bzw. gegenüber Folien, die mit Tränkharzen, die Acrylatdispersionszusätze enthalten, bei Verwendung der gleichen Melaminharze und bei gleichen Harzgehalten deutlich geringere Formaldehydemissionswerte.

Bei dem erfindungsgemäßen Verfahren entfallen die Kosten für organische Lösungsmittel, die bisher zur Herstellung der Tränkharzlösungen benötigt wurden, ebenso die Kosten für einen Explosionsschutz an den Verarbeitungsanlagen.

Bei der Trocknung treten aufgrund der höhere Tränkharzkonzentration erhebliche Einsparungen an Energie auf, und außerdem ist eine bessere Kapazitätsauslastung der Anlage gegeben.

Beispiel 1

In 133 kg ®Madurit MW 815 (handelsübliches, teilweise methylverethertes Melaminharz in 75 gew.%iger wäßriger Lösung der Firma Cassella AG, Frankfurt am Main 61) werden 3,75 kg einer 40 gew.%igen wäßrigen Lösung von p-Toluolsulfonsäure, ferner 0,5 kg ®Hypersal XT 790 (handelsübliches Härtungsmittel der Firma Cassella AG für ®Madurit-Harze) und 8 l Wasser eingetragen und unter Rühren gelöst. Diese Lösung wird bei Temperaturen von 20 bis 30°C auf die Dekorseite eines 200 g/m² schweren Dekorpapieres so aufgebracht, daß ein Harzanteil von 35 Gew.%, bezogen auf das Gewicht der fertigen Folien, erhalten wird. Anschließend wird bei einer Temperatur von 130 bis 160°C auf einen Restfeuchtegehalt von 2 bis 5% getrocknet. Die Bestimmung des Restfeuchtegehalts erfolgt durch die Bestimmung

$$F = \frac{(E - A)}{E} \times 100,$$

wobei E = Einwaage des getrockneten Papieres in Gramm und A = Auswaage nach Nachtrocknung 5 min bei 160°C, F = flüchtige Bestandteile in Prozent bedeutet.

Die so hergestellte Folie kann dann sofort mittels einer nachgeschalteten Lackierstation mit handelsüblichen Polyester-, säurehärtenden oder Nitrolacken oberflächlich lackiert und getrocknet werden. Sie wird zu einem 2 cm breiten Kantenstreifen zugeschnitten.

An der hergestellten Folie wird ein Biegetest wie folgt durchgeführt:

Ein 20 mm breiter Kantenstreifen wird um einen Metallstab mit einem Radius von 5 mm, gebogen. Bei Rißbildung oder Abreißen des Streifens wird die erreichte Durchbiegung gemessen und in Winkelgraden angegeben. Elastische Kanten brechen nicht und erhalten die Bewertung >180°. Bei dem Biegetest 200°C wird der Kantenstreifen mit Heißluft von 200°C angeblasen und gleichzeitig um einen Metallstab mit einem Radius von 3 mm gebogen und wie bei der Kaltbiegeprobe bewertet..

Das Überspannverhalten wird durch Aufkleben der Kantenstreifen auf Holzspanplattenkanten mit sehr groben Spänen in den Kernlagen geprüft. Es dürfen visuell keine Konturen der Späne erkennbar sein.

Die Spaltneigung wird geprüft durch Anreißen der Kantenstreifen in Quer- und Längsrichtung des Materials. Die entstehende Spaltfläche ist das Maß für die Spaltneigung des Streifens.

Die erhaltenen Ergebnisse beim Biegetest, beim Überspannverhalten und der Spaltneigung sind in der folgenden Tabelle unter Beispiel 1 eingegeben. In der Tabelle sind auch Angaben zu weiteren Folien enthalten.

In der nachfolgenden Tabelle sind unter den Beispielen 1 bis 4 Ergebnisse erfindungsgemäß hergestellter Folien angegeben. Die Beispiele 5 bis 9 stellen Vergleichsbeispiele dar.

In der Tabelle ist in der 3. Spalte unter der Bezeichnung "Lösungsmittel" das für die Herstellung der Tränkharzlösung benutzte Lösungsmittel angegeben.

In der 4 Spalte ist unter dem Begriff "Lösungskonzentration" die Konzentration des Harzes, auf Festharz berechnet, in der Tränkharzlösung angegeben.

In der 5 Spalte ist der Harzanteil in Gew.%a in der fertigen Folie angegeben.

In den Spalten 6 bis 8 sind die an den fertigen Folien geprüften Ergebnisse bei Biegetest, beim Überspannverhalten und bei der Spaltneigung angegeben.

| Bei-spiel | Harz Nr. | Lösungs-mittel | Lösungs-konzen-tration | Harz-anteil | Biegetest kalt | Biegetest 200°C | Überspann-verhalten | Spalt-neigung |
|---|---|---|---|---|---|---|---|---|
| 1 | I | $H_2O$ | 75 % | 36 % | 180° | >180° | gut | gering |
| 2 | II | $H_2O$ | 70 % | 34 % | >180° | >180° | gut | gering |
| 3 | III | $H_2O$ | 75 % | 35 % | >180° | >180°. | gut | gering |
| 4 | IV | $H_2O$. | 75 % | 39 % | >180° | >180° | gut | gering |
| 5 | I | i-Propanol | 45 % | 23 % | >180° | >180° | gut | gering |
| 6 | I | $H_2O$ | 24 % | 24 % | 110° | 70° | schlecht | total |
| 7 | I | $H_2O$ | 37 % | 36 % | 60° | 70° | gut | gering |
| 8 | V | $H_2O$ | 37 % | 37 % | 140° | 100° | mäßig | deutlich |
| 9 | VI | $H_2O$ | 37 % | 37 % | 180° | 110° | schlecht | stark |

Erläuterungen

Harz Nr.  I: handelsübliches Melaminharz ®Madurit MW 815

Harz Nr.  II: handelsübliches Melaminharz ®Madurit VMW 3819

Harz Nr.  III: handelsübliches Melaminharz ®Madurit VMW 3822

Harz Nr.  IV: handelsübliches methylverethertes Melaminharz mit einem
Molverhältnis Melamin : Formaldehyd : Methanol = 1 : 6 : 6,
mit unendlicher Wasserverdünnbarkeit

Die Harze I bis IV sind Produkte der Firma Cassella AG, Frankfurt am Main 61

Harz Nr. V:

Handelsübliches Melaminharz ®Madurit MW 815 der Firma Cassella Aktiengesellschaft, Frankfurt am Main 61, im Gemisch mit einer handelsüblichen Acrylat-Dispersion ®Mowilith 7830 der Firma Hoechst AG im Gewichtsverhältnis 30:70.

Harz Nr. VI

Wie Harz Nr. V, jedoch im Gewichtsverhältnis Melaminharz: Dispersion = 20:80.

## Patentansprüche

1. Verfahren zur Herstellung von Melaminharzfolien für die Beschichtung von Holzwerkstoffen, bei dem eine mindestens gewichtsprozentige wäßrige Lösung eines mindestens teilweise methylveretherten Melaminharzes einseitig so auf Papier, Cellulosevlies oder Cellulosegewebe aufgebracht und anschliessend getrocknet wird , daß die Folie, bezogen auf ihr Endgewicht, 20 bis 50 Gew.% Melaminharz enthält.

2. Verfahren nach Anspruch 1, dadurch gekennzeichnet, daß das Aufbringen so erfolgt, daß die Folie, bezogen auf ihr Endgewicht, 30 bis 50 Gew.% Melaminharz enthält.

3. Verfahren nach Anspruch 1 und/oder 2, dadurch gekennzeichnet, daß das Aufbringen so erfolgt, daß die Folie, bezogen auf ihr Endgwicht, 30 bis 40 Gew.% Melaminharz enthält.

4. Verfahren nach einem oder mehreren der Ansprüche 1 bis 3, dadurch gekennzeichnet daß die wäßrige Lösung eines Melaminharzes aufgebracht wird, die bezogen auf Festharz, bis zu 3 Gew.% eines sauren Katalysators enthält.

5. Verfahren nach einem oder mehreren der Ansprüche 1 bis 4, dadurch gekennzeichnet, daß die wäßrige Lösung eines Melaminharzes aufgebracht wird, die eine Polyvinylacetatdispersion und/oder ein wasserlösliches Alkydharz und/oder eine Acrylatdispersion enthält.

6. Verfahren nach einem oder mehreren der Ansprüche 1 bis 5, dadurch gekennzeichnet, daß die wäßrige Lösung eines Melaminharzes aufgebracht wird, die zwei oder mehr verschiedene Melaminharze enthält.

7. Verfahren nach einem oder mehreren der Ansprüche 1 bis 6, dadurch gekennzeichnet, daß die wäßrige Lösung eines veretherten Melaminharzes mit einem Molverhältnis Melamin: Formaldehyd: Methanol von 1 : (2,2 bis 6) : (2,4 bis 6) aufgebracht wird.

8. Verfahren nach einem oder mehreren der Ansprüche 1 bis 7, dadurch gekennzeichnet, daß eine wäßrige. 70- bis 75gewichtsprozentige Lösung des Melaminharzes aufgebracht wird.

## Claims

1. Process for the production of melamine resin sheets for coating wood materials, in which an at least 70 per cent strength by weight aqueous solution of an at least partially methyl-etherified melamine resin is applied to one side of paper cellulose nonwoven material or cellulose woven material and subsequently dried in a manner such that the sheet contains 20 to 50% by weight of melamine resin, based on its final weight.

2. Process according to Claim 1, characterized in that the application is effected in a manner such that the sheet contains 30 to 50% by weight of melamine resin, based on its final weight.

3. Process according to Claim 1 and/or 2, characterized in that the application is effected in a manner such that the sheet contains 30 to 40% by weight of melamine resin, based on its final weight.

4. Process according to one or more of Claims 1 to 3, characterized in that the aqueous solution of a melamine resin containing up to 3% by weight of acidic catalyst, based on the solid resin, is applied.

5. Process according to one or more of Claims 1 to 4, characterized in that the aqueous solution of a melamine resin containing a polyvinyl acetate dispersion and/or a water-soluble alkyd resin and/or an acrylate dispersion is applied.

6. Process according to one or more of Claims 1 to 5, characterized in that the aqueous solution of a melamine resin containing two or more different melamine resins is applied.

7. Process according to one or more of Claims 1 to 6, characterized in that the aqueous solution of an etherified melamine resin having a melamine: formaldehyde methanol molar ratio of 1 : ( 2.2 to 6) : (2.4 to 6) is applied.

8. Process according to one or more of Claims 1 to 7, characterized in that an aqueous 70 to 75 per cent strength by weight solution of the melamine resin is applied.

## Revendications

1. Procédé pour préparer des feuilles de résine de mélamine pour le revêtement de matériaux en bois d'oeuvre, dans lequel on applique d'un côté sur du papier, de la nappe de cellulose ou de l'étoffe de cellulose une solution aqueuse, à au moins 70% en poids d'une résine de mélamine au moins partiellement oxyméthylée, et l'on sèche ensuite le papier, la nappe ou l'étoffe de manière que la feuille contienne, par rapport à son poids final, 20 à 50% en poids de résine de mélamine.

2. Procédé selon la revendication 1, caractérisé en ce que l'application a lieu de manière que la feuille contienne, par rapport à son poids final, 30 à 50% en poids de résine de mélamine.

3. Procédé selon la revendication 1 et/ou 2, caractérisé en ce que l'application a lieu de manière que la feuille contienne, par rapport à son poids final, 30 à 40% en poids de résine de mélamine.

4. Procédé selon une ou plusieurs des revendications 1 à 3, caractérisé en ce qu'on applique la solution aqueuse d'une résine de mélamine qui contient, par rapport à la résine solide, jusqu'à 3% en poids d'un catalyseur acide.

5. Procédé selon une ou plusieurs des revendications 1 à 4, caractérisé en ce qu'on applique la solution aqueuse d'une résine de mélamine qui contient une dispersion de poly(acétate de vinyle) et/ou une résine alkyde hydrosoluble et/ou une dispersion acrylique.

6. Procédé selon une ou plusieurs des revendications 1 à 5, caractérisé en ce qu'on applique la solution aqueuse d'une résine de mélamine contenant deux ou plus de deux résines de mélamine différentes.

7. Procédé selon une ou plusieurs des revendications 1 à 6, caractérisé en ce qu'on applique la solution aqueuse d'une résine de mélamine éthérifiée, présentant un rapport molaire mélamine: formaldéhyde: méthanol de 1: (2,2 à 6) : (2,4 à 6).

8. Procédé selon une ou plusieurs des revendications 1 à 7, caractérisé en ce qu'on applique une solution aqueuse contenant 70 à 75% en poids de la résine de mélamine.